# FASCICULE DE BREVET EUROPEEN

(11) **EP 0 942 845 B1**
(45) Date de publication et mention de la délivrance du brevet: **13.06.2001**
(21) Numéro de dépôt: 97951310.8
(22) Date de dépôt: 11.12.1997
(51) Int. Cl.: B60N 2/48

(54) **DISPOSITIF DE BLOCAGE POUR APPUI-TETE, NOTAMMENT POUR SIEGE DE VEHICULE AUTOMOBILE**
RASTVORRICHTUNG FÜR KOPFSTÜTZE, INSBESONDERE FÜR KRAFTWAGENSITZE
DEVICE FOR SECURELY ADJUSTING THE HEIGHT OF A HEADREST, IN PARTICULAR FOR A MOTOR VEHICLE SEAT

(30) Priorité: 11.12.1996 FR 9615206
(43) Date de publication de la demande: 22.09.1999
(73) Titulaire: Centre d'Etudes et Recherche pour l'Automobile, 51100 Reims (FR)
(72) Inventeur: DHOLLANDE, Philippe, F-02100 Saint-Quentin (FR); LE GALL, François, F-02130 Coulonges Cohan (FR)
(74) Mandataire: Geismar, Thierry
(86) Numéro de dépôt international: FR9702273
(87) Numéro de publication internationale: WO9825793

(56) Documents cités:
- FR-A- 2 571 317
- US-A- 4 545 618
- US-A- 4 695 095
- US-A- 4 978 169

## Description

La présente invention concerne un dispositif de blocage pour appui-tête, notamment pour siège de véhicule automobile, et plus particulièrement d'un tel appui-tête du type comprenant au moins une broche engagée dans une douille solidaire de la structure dudit siège.

Les appui-tête utilisés dans l'industrie automobile comprennent de façon connue un coussin d'appui monté à l'extrémité supérieure de deux broches, dont l'autre extrémité pénètre dans le dossier du siège. Lorsque ces appui-tête sont réglables en hauteur, les broches sont généralement montées coulissantes dans des douilles solidaires de l'armature du siège.

Un sérieux inconvénient de ces appui-tête réside dans le fait que, lors de chocs frontaux, ils ont tendance à monter sous l'effet de la force centrifuge induite par le basculement rapide des dossiers de siège vers l'avant. Cet effet peut aller jusqu'à l'éjection des appui-tête, qui sont alors projetés à travers l'habitacle du véhicule.

C'est la raison pour laquelle on a proposé des dispositifs de blocage d'appui-tête munis de moyens anti-extraction comprenant un ressort en U dont les extrémités des branches sont fixées à la douille, dont les branches s'étendent vers le bas généralement dans la direction de l'axe de la broche, et dont la partie centrale est agencée pour s'engager dans une encoche de la broche. L'encoche de la broche est telle que, lorsque la partie centrale du ressort y est engagée, elle ne peut en sortir par simple traction de l'appui-tête vers le haut.

Il est cependant souhaitable que des appui-tête munis de tels dispositifs de blocage restent démontables.

Des appuis-tête démontables du type rappelé ci-dessus sont décrits dans les documents FR-A-2 571 317 et US-A-4 695 095.

La présente invention vise également à fournir un dispositif de blocage permettant la démontabilité de l'appui-tête, et notamment sa démontabilité depuis l'extérieur du siège.

A cet effet, l'invention a pour objet un dispositif de blocage pour appui-tête de siège, notamment de véhicule automobile, selon la revendication 1.

Ainsi, l'appui-tête est bloqué contre une extraction involontaire due à un effort exercé vers le haut, du fait de l'interaction du ressort et de l'encoche. Il reste toutefois démontable

Dans un mode de réalisation particulier, lesdits moyens de manoeuvre comprennent un organe de traction agencé pour tirer l'organe de déverrouillage vers le haut.

Dans un autre mode de réalisation particulier, lesdits moyens de manoeuvre comprennent un poussoir accessible à travers le garnissage du siège et agencé pour faire basculer l'organe de déverrouillage..

Egalement dans un mode de réalisation particulier de l'invention, ledit organe de déverrouillage comprend une surface formant patin pour coopérer avec la surface de ladite broche, ladite surface formant patin étant agencée de telle sorte que, lorsqu'elle est en contact avec la surface de la broche, elle provoque un déplacement de l'organe de déverrouillage entraînant celui-ci à repousser ladite partie centrale à l'écart de la surface de la broche.

Un tel agencement permet d'éviter que la partie centrale du ressort ne frotte, lors de l'insertion de l'appui-tête ou de son réglage, contre la surface de la broche, et n'entraîne l'usure de son chromage ou de sa peinture.

Plus particulièrement, ledit déplacement de l'organe de déverrouillage peut être tel qu'il entraîne ladite surface de came à repousser ladite partie centrale hors de ladite encoche.

On décrira maintenant, à titre d'exemple non limitatif, deux modes de réalisation particuliers de l'invention, en référence aux dessins schématiques annexés dans lesquels:
- la figure 1 est une vue de côté simplifiée d'un dispositif selon l'invention, dans une position où l'extraction de l'appui-tête est empêchée;
- la figure 2 est une vue similaire à la figure 1 de ce dispositif, le représentant alors qu'une broche de l'appui-tête y est engagée;
- la figure 3 est une vue similaire aux figures 1 et 2, en position d'extraction de l'appui-tête; et
- la figure 4 montre un autre mode de réalisation de l'invention.

Les flèches AV-AR représentent respectivement l'avant et l'arrière du véhicule sur lequel sont montés les dispositifs selon l'invention.

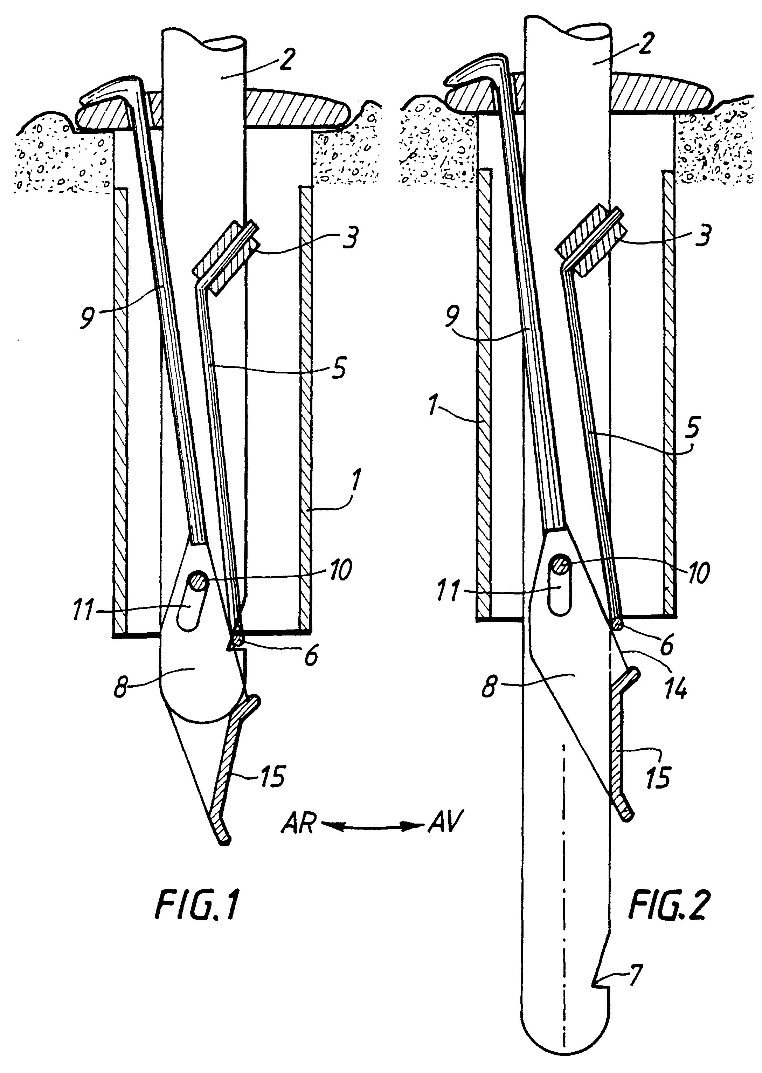

On voit sur les figures 1 à 3 une douille 1 de montage d'un appui-tête, non représenté, cet appui-tête étant muni de la broche de support 2. La douille 1 comprend notamment une unité non représentée de réglage en hauteur et de blocage de la broche de tout type convenable. La douille 1 est montée de façon connue sur la structure du siège.

La douille reçoit par deux ancrages 3 les deux extrémités d'un ressort en U 5. Ce ressort a ses branches qui s'étendent vers le bas généralement dans la direction de l'axe de la broche, vers l'avant par rapport à la broche, et sa partie centrale 6 sensiblement horizontale.

La broche 2 comporte, à son extrémité inférieure, une encoche 7 parallèle à la partie centrale 6 du ressort et du côté de cette partie. L'encoche 7 possède un flanc abrupt vers le bas et un flanc incliné vers le haut. L'extrémité inférieure de la broche 2 est arrondie, ou conique ou tronconique.

Ainsi, lorsque l'appui-tête est enfoncé pour être mis en place, l'extrémité inférieure des broches 2 repousse vers l'avant les parties inférieures des ressorts. Les parties centrales 6 de ces ressorts glissent le long de la surface de ces broches, s'engagent dans les encoches 7, puis peuvent en ressortir du fait des surfaces inclinées vers le haut de ces dernières.

Lorsqu'au contraire, on tente d'extraire brusquement l'appui-tête, volontairement ou non, les parties centrales 6 s'engagent dans les encoches 7, mais ne peuvent en ressortir du fait du flanc abrupt qu'elles présentent vers le bas.

Afin de permettre néanmoins l'extraction de l'appui-tête, un organe de déverrouillage 8 est solidaire d'une tirette de manoeuvre 9. La tirette 9 est accessible depuis le haut et l'extérieur du dossier du siège. L'organe 8 est guidé dans sa course vers le haut par un doigt fixe 10 engagé dans un trou oblong 11 de l'organe 8. La tirette 9 présente une certaine souplesse de manière à permettre un basculement de l'organe 8, comme montré à la figure 2.

La tirette et l'organe de déverrouillage sont par exemple symétriques par rapport à un plan parallèle au plan de symétrie du véhicule, mais d'autres formes, dans un plan perpendiculaire à celui des figures, peuvent être envisagées.

L'organe 8 comporte au moins une surface de came 14 inclinée vers le bas et vers l'avant sur laquelle peut porter la partie centrale 6 du ressort. Lorsque l'organe 8 est tiré vers le haut, la surface 14 repousse donc cette partie centrale vers l'avant, hors de l'encoche 7, contre la réaction élastique du ressort 5. L'appui-tête peut ainsi être extrait.

L'organe 8 possède par ailleurs un patin 15 agencé pour glisser le long de la surface de la broche 2. Lorsque la broche est engagée dans la douille, elle fait basculer l'organe 8 vers l'avant, comme montré à la figure 2, amenant la surface de came 14 à repousser la partie centrale 6 du ressort hors du contact de la surface de la broche, et permettant un coulissement de cette dernière sans risque d'usure.

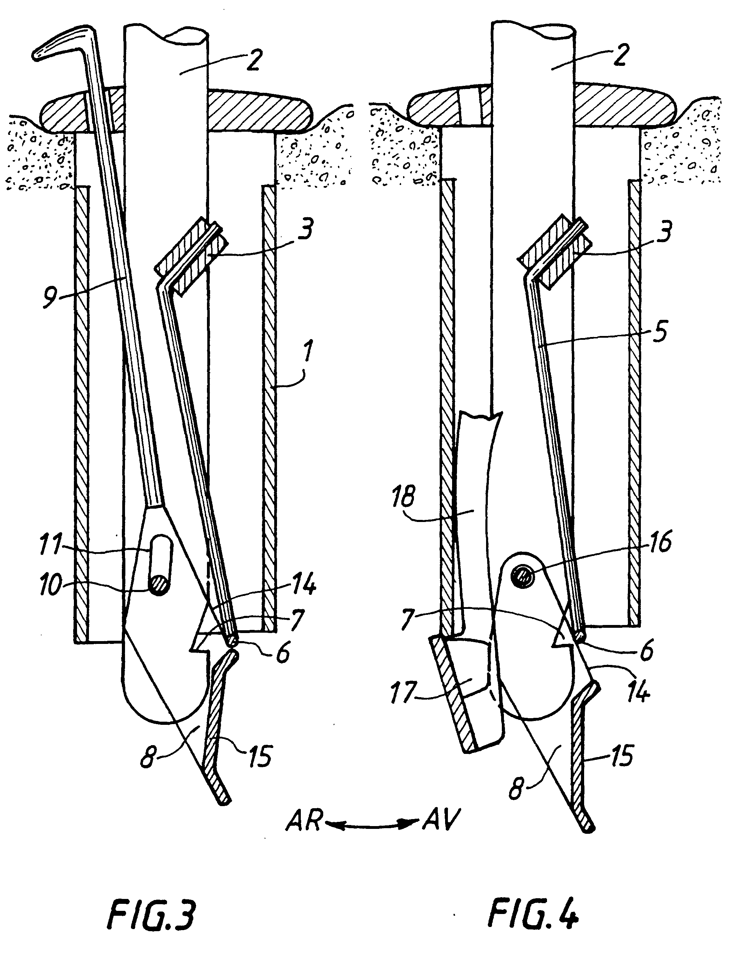

On a conservé dans la figure 4 les mêmes références que dans les figures 1 à 3 pour désigner les mêmes éléments.

La tirette est ici supprimée et l'organe de déverrouillage 8 est simplement monté sur un axe de rotation 16. Un poussoir 17, accessible à travers le garnissage du dossier du siège par l'arrière de celui-ci, est monté à l'extrémité inférieure d'un bras élastique 18 dont l'autre extrémité est solidaire de la douille 1.

Le poussoir est immédiatement derrière l'organe 8, de manière à le faire basculer vers l'avant lorsqu'il est enfoncé. Ainsi, la surface de came 14 repousse la partie centrale 16 du ressort 5 hors de l'encoche 7, ce qui permet l'extraction de l'appui-tête.

Pour le reste, le mode de réalisation de la figure 4 fonctionne comme celui des figures 1 à 3.

## Revendications

1. Dispositif de blocage pour appui-tête de siège, notamment de véhicule automobile, cet appui-tête comprenant au moins une broche (2) engagée dans une douille (1) solidaire de la structure dudit siège, dispositif comprenant un ressort en U (5) dont les extrémités des branches sont fixées à ladite douille, dont les branches s'étendent vers le bas généralement dans la direction de l'axe de la broche, et dont la partie centrale (6) est agencée pour s'engager dans une encoche (7) de la broche, caractérisé par le fait qu'il comprend un organe de déverrouillage (8) comportant une surface de came (14) coopérant avec ladite partie centrale du ressort en U, et des moyens de manoeuvre (9;17) accessibles depuis l'extérieur du siège et reliés audit organe de déverrouillage pour l'actionner, ladite surface de came étant agencée pour repousser ladite partie centrale hors de ladite encoche, contre l'action élastique des branches du ressort, lorsque l'organe de déverrouillage est actionné par les moyens de manoeuvre.

2. Dispositif selon la revendication 1, dans lequel lesdits moyens de manoeuvre comprennent un organe de traction (9) agencé pour tirer l'organe de déverrouillage vers le haut.

3. Dispositif selon la revendication 1, dans lequel lesdits moyens de manoeuvre comprennent un poussoir (17) accessible à travers le garnissage du siège et agencé pour faire basculer l'organe de déverrouillage.

4. Dispositif selon l'une quelconque des revendications 1 à 3, dans lequel ledit organe de déverrouillage comprend une surface formant patin (15) pour coopérer avec la surface de ladite broche, ladite surface formant patin étant agencée de telle sorte que, lorsqu'elle est en contact avec la surface de la broche, elle provoque un déplacement de l'organe de déverrouillage entraînant celui-ci à repousser ladite partie centrale à l'écart de la surface de la broche.

5. Dispositif selon la revendication 4, dans lequel ledit déplacement de l'organe de déverrouillage entraîne ladite surface de came à repousser ladite partie centrale hors de ladite encoche.

## Claims

1. A locking device for a seat headrest, notably for a motor vehicle, this headrest comprising at least one pin (2) engaged in a socket (1) fixed to the structure of the said seat, a device comprising a U-shaped spring (5), the ends of whose legs are fixed to the said socket, whose legs extend downwards generally in the direction of the axis of the pin, and whose central part (6) is arranged so as to engage in a notch (7) in the pin, characterised by the fact that it comprises an unlocking member (8) having a cam surface (14) cooperating with the said central part of the U-shaped spring, and manoeuvring means (9, 17) accessible from the outside of the seat and connected to the said unlocking member in order to actuate it, the said cam surface being arranged so as to push the said central part out of the said notch, counter to the elastic action of the legs of the spring, when the unlocking member is actuated by the manoeuvring means.

2. A device according to Claim 1, characterised in that the said manoeuvring means comprise a traction member (9) arranged so as to pull the unlocking member upwards.

3. A device according to Claim 1, in which the said manoeuvring means comprise a pusher (17) accessible through the seat padding and arranged to cause the unlocking member to tilt.

4. A device according to any one of Claims 1 to 3, in which the said unlocking member comprises a surface forming a shoe (15) for cooperating with the surface of the said pin, the said surface forming a shoe being arranged so that, when it is in contact with the surface of the pin, it causes a movement of the unlocking member causing the latter to push the said central part away from the surface of the pin.

5. A device according to Claim 4, in which the said movement of the unlocking member causes the said cam surface to push the said central part out of the said notch.

## Patentansprüche

1. Arretiervorrichtung für die Kopfstütze eines Sitzes, insbesondere in einem Automobil-Fahrzeug, wobei diese Kopfstütze mindestens eine in eine an der Struktur des besagten Sitzes befestigten Hülse (1) eingeführte Spindel (2) umfasst, wobei die Vorrichtung eine U-förmige Feder (5) aufweist, deren Schenkelenden an der besagten Hülse befestigt sind, deren Schenkel sich nach unten im allgemeinen in Richtung der Spindelachse erstrecken, und deren mittlerer Teil (6) vorgesehen ist, um in eine Kerbe (7) der Spindel eingeführt zu werden, dadurch gekennzeichnet, dass sie ein Entriegelungsorgan (8) umfasst mit einer Nockenoberfläche (14), die mit dem besagten mittleren Teil der U-förmigen Feder zusammenwirkt, sowie Betätigungsmittel (9 ; 17), die von außerhalb des Sitzes zugänglich und mit dem besagten Verriegelungsorgan verbunden sind, um ihn zu betätigen, wobei die besagte Nockenoberfläche vorgesehen ist, um den besagten mittleren Teil entgegen der federnden Aktion der Federschenkel aus der besagten Kerbe zu stoßen, wenn das Entriegelungsorgan mit den Betätigungsmitteln betätigt wird.

2. Vorrichtung nach Anspruch 1, bei der die besagten Betätigungsmittel ein Zugorgan (9) umfassen, von dem das Entriegelungsorgan nach oben gezogen werden soll.

3. Vorrichtung nach Anspruch 1, bei der die besagten Betätigungsmittel einen Druckknopf (17) umfassen, der durch die Verkleidung des Sitzes hindurch zugänglich ist und das Entriegelungsorgan ausschwenken soll.

4. Vorrichtung nach einem der Ansprüche 1 bis 3, bei der das besagte Entriegelungsorgan eine einen Gleitschuh (15) bildende Oberfläche umfasst, um mit der Oberfläche der besagten Spindel zusammen zu wirken, wobei die besagte, einen Gleitschuh bildende Oberfläche so angeordnet ist, dass sie, wenn sie mit der Oberfläche der Spindel in Kontakt steht, eine Verschiebung des Entriegelungsorgans bewirkt, damit dieses den besagten mittleren Teil von der Oberfläche der Spindel zurückstößt.

5. Vorrichtung nach Anspruch 4, bei der die besagte Verschiebung des Entriegelungsorgans bewirkt, dass die besagte Oberfläche der Nocke den besagten mittleren Teil aus der besagten Kerbe stößt.
